# EUROPEAN PATENT APPLICATION

(11) **EP 1 707 607 A1**
(43) Date of publication of application: **04.10.2006**
(21) Application number: 05703542.0
(22) Date of filing: 13.01.2005
(51) Int. Cl.: C09D 201/00, C09D 5/44, C09D 163/00, C09D 175/04

(54) **CATIONIC ELECTRODEPOSITION COATING COMPOSITION**

(30) Priority: 14.01.2004 JP 2004007030
(71) Applicant: Nippon Paint Co., Ltd., Osaka-shi, Osaka 531-8511 (JP)
(72) Inventor: NINOMIYA, Yusuke, Yokohama-shi, Kanagawa 2200051 (JP); ISHII, Toshiyuki, Kawasaki-shi, Kanagawa 2160005 (JP)
(74) Representative: Perry, Robert Edward
(86) International application number: PCT/JP2005/000303
(87) International publication number: WO 2005/068570

(57) **Abstract**

The present invention relates to a cationic electrodeposition coating composition containing resin fine particles, which has excellent pigment sedimentation stability and re-dispersibility. The cationic electrodeposition coating composition according to the present invention comprises resin fine particles having average particle size of no less than 0.5 µm to less than 15 µm in a proportion of 1 to 30% by weight based on solid contents of the coating composition.

## Description

### FIELD OF THE INVENTION

The present invention relates to a cationic electrodeposition coating composition comprising resin fine particles, which has excellent pigment sedimentation stability and re-dispersibility.

### BACKGROUND OF THE INVENTION

The electrodeposition coating is one of the coating methods, which is carried out by immersing an article to be coated into an electrodeposition coating composition, and applying voltage. This method is widely utilized as a under coating method for an article to be coated, which has a large and complicated shape, particularly such as vehicle bodies, since the coating can be formed to detailed portions, even if the article has a complicated shape, and the coating can be provided automatically and continuously.

Generally, an electrodeposition coating composition contains a large amount of corrosion resistant pigments and filler pigments for improving corrosion resistance and physical properties of the coating film. In the coaling composition, these pigments are present as dispersed in an aqueous medium. Generally, these pigments are inorganic pigments, which have high specific gravity, and therefore sedimentation thereof readily occurs in the electrodeposition coating composition. For example, a conventional electrodeposition coating composition containing inorganic pigments is left statically for a few hours, which allows the inorganic pigments to sediment. The sedimented pigments easily tend to be strongly aggregated and it is very difficult to recover the original dispersed state, even if they are stirred again. An electrodepositing tank and a re-supplying tank, each of which contains an electrodeposition coating composition, require continuous stirring to prevent such aggregation, which imposes cost of facilities and energy on those skilled in the art of coating.

Furthermore, the inorganic pigments having high specific gravity readily sediment during the electrodeposition coating operation, as well. In some cases, the resulting sediments during the electrodeposition coating may deposit on the upper planar surface of the coated article. This causes a coating film having a rough surface, an uneven coating, or the like. It will be a particularly big problem with the coating on the article which has a larger size and a larger planar area, such as vehicle bodies.

JP-A-6-73314 (Patent Literature No. 1) discloses a cationic electrodeposition coating composition characterized in that the composition contains crosslinked resin fine particles obtained by copolymerizing radical polymerizable monomers. This coating composition contains no less than 30% by weight of inorganic pigments such as titanium oxide and kaolin. When the electrodeposition coating composition contains a large amount of inorganic pigments, sedimentation and aggregation can not be avoided, and defects on the coating film, such as rough surface, can not be avoided, as well.

Furthermore, JP-A-6-340832 (Patent Literature No. 2) discloses an electrodeposition coating composition characterized in that the composition contains 0.1 to 40 parts by weight of amorphous spherical silica powder, which has high purity, relative to 100 parts by weight of resin solid contents of the electrodeposition coating composition. It is described that the use of the amorphous spherical silica powder having high purity can inhibit sedimentation of titanium oxide and corrosion resistant pigments in the electrodeposition coating bath. However, such coating composition has a defect which is a difficulty of redispersing in the case such pigments were sedimented after static standing etc.

JP-A-2001-205183 (Patent Literature No. 3) discloses a coating method for a vehicle body wherein a plastic coated metal is used as a main outer part of the vehicle body to form a shell body, and the exposed metal area on the shell body is subjected to a electrodeposition coating using an electrodeposition coating composition which allows to form a clear coating film without a coloring pigment, wherein the content of the solid contents in a bath is no more than 10% by weight. Furthermore, Patent Literature No. 3, claim 6 and Example 4 disclose embodiments wherein the electrodeposition coating composition contains gel fine particles. However, concerning these gel fine particles and the resin fine particles according to the present invention, there is a large difference between their production methods. There is also a large difference between these particles in their particle size. Furthermore, there is a difference between the object of the present invention and that of the invention disclosed in Patent Literature No.3 wherein the electrodeposition coating composition is readily deposited on the boundary between the exposed metal area and the plastic coating film to improve corrosion resistance and corrosion-preventing property.

Patent Literature No. 1: JP-A-6-73314
Patent Literature No. 2: JP-A-6-340832
Patent Literature No. 3: JP-A-2001-205183

### DISCLOSURE OF THE INVENTION

### OBJECTS OF THE INVENTION

The present invention is to solve problems such as sedimentation, aggregation and rough surface, and aiming for providing an electrodeposition coating composition having excellent pigment sedimentation stability and re-dispersibility, which includes certain resin fine particles.

### SUMMARY OF THE INVENTION

The present invention provides a cationic electrodeposition coating composition comprising resin fine particles having average particle size of no less than 0.5 µm to less than 15 µm in a proportion of 1 to 30% by weight based on solid contents of the coating composition, which accomplishes the above described objects.

It is preferable that the resin fine particle has specific gravity of 0.95 to 1.30.

It is preferable that the cationic electrodeposition coating composition is a cationic electrodeposition coating composition further comprising a cationic epoxy resin and a blocked isocyanate curing agent.

One embodiment of the present invention includes a cationic electrodeposition coating composition wherein concentration of a pigment is no more than 10% by weight based on solid contents of the coating composition.

Another embodiment of the present invention includes a cationic electrodeposition coating composition free from a pigment.

Another embodiment of the present invention includes a cationic electrodeposition coating composition wherein concentration of a pigment is 0.1 to 10% by weight based on solid contents of the coating composition.

### TECHNICAL EFFECT OF THE INVENTION

The cationic electrodeposition coating composition according to the present invention is characterized in that the composition contains 1 to 30% by weight of resin fine particles having average particle size of no less than 0.5 µm to less than 15 µm relative to solid contents of the coating composition. These resin fine particles have lower specific gravity than that of the conventionally used pigments such as inorganic filler pigments. Therefore, it reduces the sedimentation of the solid contents contained in the electrodeposition coating composition. The electrodeposition coating composition according to the present invention can slightly precipitate after a long term static leaving, and the resulting precipitate can be readily re-dispersed by stirring. Thus, there is no need for continuous stirring of the electrodeposition coating composition during its storage and continuous stirring in the electrodepositing bath during the electrodeposition coating. This can provide an omission of stirring, and a consecutive stirring. Consequently, cost of the electrodeposition coating can be reduced.

Furthermore, the electrodeposition coating composition according to the present invention has excellent sedimentation stability, and the sedimentation during the electrodeposition coating would not occur. Therefore, it reduces the deposition of the precipitate, which is sedimented during the coating, on the upper planar surface of the coated article, and it can produce a coating film having good appearance, particularly, on the planar surface.

Furthermore, selection of average particle size of the resin fine particles contained in the electrodeposition coating composition according to the present invention as well as selection of concentration of the resin fine particles relative to solid contents of the coating composition can desirously control gloss value of the resulting cured coating film. In addition, the electrodeposition coating composition according to the present invention has good cissing (oil contaminated cissing)-preventing property due to the contained resin fine particles.

### DETAILED DESCRIPTION OF THE PREFERRED EMBODIMENTS

***Electrodeposition coating composition***
The cationic electrodeposition coating composition according to the present invention includes an aqueous medium, and a binder resin containing a cationic epoxy resin and a blocked isocyanate curing agent, a neutralizing acid, an organic solvent and resin fine particles, which are dispersed or dissolved in the aqueous medium. The cationic electrodeposition coating composition may further include a pigment.

***Resin fine particles***
The electrodeposition coating composition according to the present invention is characterized in that the composition contains the resin fine particles. The resin fine particles herein may have a crosslinked structure therein, wherein the crosslinking may be any of an intramolecular crosslinking, an intermolecular crosslinking, and a combination thereof. Generally, the resin fine particles include fine particles of organic polymers such as acrylic resins, polyesters, polyurethanes, polystyrenes and vinyl chlorides; and resin fine particles containing inorganic components such as silicone and fluorine.

Preferable resin fine particles includes fine particles of resins such as acrylic resins, vinyl chlorides, phenol resins, urea resins, polystyrene resins, celluloses, polyethylenes, melamines, benzoguanamines, polyacrylonitriles, polypropylenes, polyamides and polycarbonates.

When fine particles of acrylic resins are used, it is more preferable to use fine particles of crosslinked acrylic resins. This is because use of the crosslinked acrylic resins can improve mechanical strength, hot water-resistance and solvent-resistance in the cured coating film.

The average particle size of the resin fine particles employed in the present invention is no less than 0.5 µm to less than 15 µm, preferably 0.5 to 10 µm, more preferably 0.8 to 10 µm, further preferably 1 to 8 µm. When the average particle size of the resin fine particles is less than 0.5 µm or the size is 15 µm or more, the resulting coating film may not have a good planar appearance.

Average particle size is generally used to represent a grain size of a particle (or represent if the particle size is large or small). For example, median size corresponding to 50% by weight, arithmetical mean size, surface area mean size, volume-area mean size are used.
The average particle size of the resin fine particles employed in the present invention represents median size measured in an apparatus measuring particle size distribution in a laser diffraction scattering manner.

The resin fine particles employed in the present invention is different from the fine particles, such as gel fine particles and microgel fine particles, which have been used in the field of the conventional electrodeposition coating composition. These gel fine particles and microgel fine particles generally have average particle size of approximately 10 to 300 nm. In respect to the gel fine particles used in JP-A-2001-205183 (Patent Literature No.3), the literature describes in paragraph 0054 that "it is preferable that the particles have particle size of no more than 500 nm, particularly 10 to 300 nm, more particularly 50 to 100 nm". The fine particles are prepared by an emulsion polymerization, which provides particles having such average particle size. The emulsion polymerization is conducted by emulsifying a part of monomers and a surfactant in water, and adding dropwise the rest of the monomers to the emulsion. In the emulsion polymerization, an aqueous polymerization initiator is employed.

On the other hand, the resin fine particles employed in the present invention is prepared by a suspension polymerization. Preparation *via* a suspension polymerization provides resin fine particles having a larger average particle size, approximately 0.5 to 15 µm, in comparison with that of the fine particles obtained by the emulsion polymerization. Herein, the suspension polymerization is a method, wherein a number of unsaturated monomer compounds are dispersed or suspended in a large amount of water to conduct addition polymerization of the monomer compounds, thus producing a polymer. A polymerization initiator soluble in these monomers is employed. The polymerization reaction proceeds in a droplet (or an oil droplet) of the suspended monomers, and this droplets results in a polymer as it is, wherein the resulting resin fine particle has an approximately same size to that of the droplet.

In the suspension polymerization, appropriate dispersing resins may be employed. Use of dispersing resins can control the size of the oil droplet of the monomers, and it can control the level of average particle size of the resulting resin fine particles. For example, dispersing resins, which may be used, include cationic modified acrylic resins, cationic modified epoxy resins, cationic modified polybutadiene resins and the like. Herein, a method, wherein the resin fine particles having average particle size of 0.5 to 1 µm (i.e., submicron size) are prepared by the suspension method, may be referred to a miniemulsion preparing method. This miniemulsion preparing method is a production method wherein an oil droplet of the monomers is finely particulated into a submicron size particle by using a high performance emulsifying apparatus, and then subjected to suspension polymerization.

Concentration of the resin fine particles is 1 to 30% by weight, preferably 3 to 15% by weight based on solid contents of the electrodeposition coating composition. When the concentration of the resin fine particles is more than 30% by weight, the resulting coating film may have poor planar appearance. When the concentration of the resin fine particles is less than 1% by weight, there is a case excellent oil contaminated cissing-preventing property can not be obtained. Generally, cissing means that holes on the coating film are generated, during a later heat-curing process, by bumping of organic compounds having low molecular weight which is contained in the coating composition, and bumping of oil which is derived from outside and attached to the article to be coated, and the like.

Varying average particle size of the resin fine particles to be used as well as concentration of the resin fine particles in the electrodeposition coating composition relative to the solid contents of the coating composition within the ranges defined above can adjust gloss of the cured coating film within a range of 5 to 100. Generally, the used resin fine particles have a larger average particle size and/or content of the resin fine particles in the coating fluid is higher, gloss is lower.

Specific gravity of the resin fine particles employed in the present invention is preferably 0.95 to 1.30, more preferably 0.98 to 1.20. When specific gravity of the resin fine particles is less than 0.95, there is a possibility that the resin fine particles will fioat in the coating composition. On the other hand, when specific gravity is more than 1.30, sedimentability of the resin fine particles in the coating composition is adversely changed to produce precipitates, and there is a possibility that the coating film will have poor planar appearance.

The coating composition according to the present invention may or may not have a pigment. When the electrodeposition coating composition have a pigment, it is preferable to contain a pigment in the concentration of no more than 10% by weight, for example, concentration of 0.1 to 10% by weight, more preferably 0.2 to 8% by weight, further preferably 0.2 to 5% by weight, relative to solid contents of the coating composition. When the concentration of the pigment is more than 10% by weight, there is possibility that the electrodeposition composition will have poor re-dispersibility and the resulting coating film will have poor planar appearance. Furthermore, the electrodeposition coating composition according to the present invention may have no pigment at all. It is preferable that the electrodeposition coating composition contains a trace amount of a pigment necessary for coloring at the lowest but required level to test if the condition of the obtained coating film after electrodeposition coating is sufficient or insufficient. Herein, the pigment content is significantly reduced than that in the conventional electrodeposition coating composition. Thus decreased pigment content will give disadvantages such as decrease in shielding ability and corrosion resistance of the electrodeposition coating film.

In the present invention, use of certain resin fine particles as described above realizes the reduced pigment content and none of pigment content without missing hiding ability and corrosion resistance of such electrodeposition coating film. In the case that the electrodeposition coating composition contains the resin fine particles in accordance with the present invention, these resin fine particles are oriented around the surface of the coating film during the electrodeposition coating. This allows gloss value of the coating film to be appropriately adjusted in accordance with the difference in the refractive index between the resin fine particle and the binder resin, without decreasing the surface roughness of the coating film, in other words with maintaining the smoothness of the coating film. This adjustment can ensure the shielding ability of the coating film.

Furthermore, addition of the resin fine particles in the present invention can provide effects that viscosity is appropriately increased upon deposition of a coating film during electrodeposition coating and upon flow baking of a coating film. In other words, the resin fine particle effects as a viscosity modurator, which can retain thickness of a coating film to improve corrosion resistance. In addition, Tg of the resin fine particle described above is generally higher than that of the binder component. Therefore, use of such resin fine particles can provide an effect on improving corrosion resistance.

Preferable resin fine particles include "Techpolymer (product name)" Series manufactured by SEKISUI PLASTICS CO., LTD., "Chemisnow (product name)" manufactured by Soken Chemical & Engineering Co., Ltd. and the like.
"Techpolymer" includes fine particles of crosslinked acrylic resins obtainable by suspension polymerization, and
"Chemisnow" includes fine particles of crosslinked acrylic resins obtainable by suspension polymerization.

The resin fine particles are previously dispersed in an aqueous medium at a high concentration to provide a paste form (a resin fine particles dispersed paste), which readily enables the resin fine particles to be uniformly dispersed in the electrodeposition coating composition at a low concentration. Furthermore, it is considered that the resin fine particles are dispersed in a pigment-dispersed resin dispersible/soluble in an aqueous medium, which allows the surface of the resin fine particles to be coated with the pigment-dispersed resin. In this aspect, it is considered that the resin fine particles are ionized, and stably dispersed in the electrodeposition coating composition, and the resin fine particles are readily deposited by applying voltage during the electrodeposition coating process.

The resin fine particles dispersed paste can be prepared, for example, by adding resin fine particles to a pigment-dispersed resin varnish, and mixing in a stirring/mixing machine and the like for 1 to 30 minutes. The pigment-dispersed resin varnish means a resin varnish wherein a pigment-dispersed resin is dispersed in an aqueous medium. The pigment-dispersed resin generally includes cationic or nonionic surfactants having low molecular weight, cationic polymers such as modified epoxy resins having quaternary ammonium groups and /or tertiary sulfonium groups. The aqueous medium includes ion exchanged water, water containing a small amount of alcohols, and the like. Generally, the amount of the pigment-dispersed resin to be used is 5 to 100 parts by mass relative to 100 parts by mass of the resin fine particles as basis of solid contents. Provided that when the resin fine particles to be used are resin fine particles prepared by a suspension polymerization wherein cationic dispersing resins are used, it may be needless to carry out the pigment dispersing process described above.

The resin fine particles may be used in a dispersed paste form which is thus preliminary prepared, or may be used with a pigment in a dispersed state upon the dispersion paste is prepared. Furthermore, preparation of a coating composition may directly employ resin fine particles prepared by a suspension polymerization method in a suspension state (slurry state) as they are. Alternatively, the preparation of the coating composition may employ these particles in a state wherein these resin particles are dispersed in an aqueous medium containing a surfactant.

***Cationic epoxy resin***
The cationic epoxy resin used in the present invention includes an epoxy resin modified with amine. The cationic epoxy resin is typically produced by modifying all of the epoxy group of a bisphenol type epoxy resin with an active hydrogen compound which can introduce a cationic group, or by modifying the portion of an epoxy group with other active hydrogen compound and modifying the residual epoxy group with an active hydrogen compound which can introduce a cationic group.

The typical example of the bisphenol type epoxy resin is a bisphenol A type epoxy resin or a bisphenol F type epoxy resin. The commercially available product of the former includes Epikote 828 (manufactured by Yuka-Shell Epoxy Co., Ltd., epoxy equivalent: 180 to 190), Epikote 1001 (the same, epoxy equivalent: 450 to 500), Epikote 1010 (same, epoxy equivalent: 3000 to 4000) and the like and the commercially available product of the latter includes Epikote 807 (same, epoxy equivalent: 170) and the like.

An epoxy resin containing an oxazolidone group which is indicated by the formula below which is disclosed in JP-A No. 5-306327:

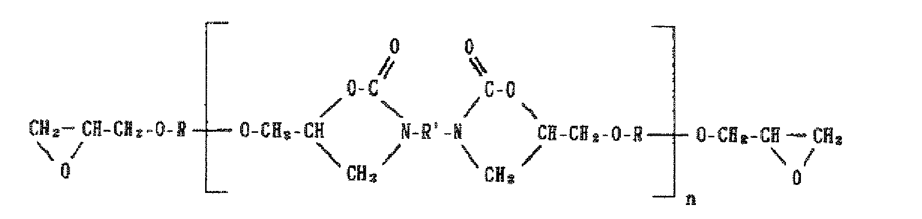

Wherein R means a residual group formed by removing the glycidyloxy group of a diglycidylepoxy compound, R' means a residual group formed by removing the isocyanate group of a diisocyanate compound and n means a positive integer, may be used as the cationic epoxy resin. This is because coating film superior in heat resistance and corrosion resistance is obtained.

As the method of introducing the oxazolidone group into the epoxy resin, for example, a blocked isocyanate curing agent which is blocked with lower alcohol such as methanol and polyepoxide are heated in the presence of a basic catalyst to keep its temperature and it is obtained by removing lower alcohol as by-product with distilling from the system.

The preferable epoxy resin in particular is an epoxy resin containing an oxazolidone group. This is because coating film superior in heat resistance and corrosion resistance and further also superior in impact resistance is obtained.

It is known that the epoxy resin containing an oxazolidone group is obtained by reacting a bifunctional epoxy resin with a diisocyanate (namely, bisurethane) which is blocked with monoalcohol. The specific example and production process of the epoxy resin containing an oxazolidone group are disclosed in, for example, the paragraphs 0012 to 0047 of Japanese Patent Publication No. 128959/2000 and known. In addition, USP 6, 664, 345, which is based on the application (JP Publication No. 128959/2000) and claimed its priority, and USP 6,664,345 is incorporated herein by reference.

These epoxy resins may be modified with appropriate resins such as polyester polyol, polyether polyol and monofunctional alkylphenol. Further, the epoxy resin Can extend its chain utilizing the reaction of an epoxy group with diol or dicarboxylic acid.

It is desirable that the group of these epoxy resins is reacted with an active hydrogen compound so that an amine equivalent is 0.3 to 4.0 meq/g after ring opening and the primary amino group occupies more preferably 5 to 50% therein.

The active hydrogen compound capable of introducing the cationic group includes the acid salts of the primary amine, secondary amine and tertiary amine, sulfide and an acid mixture. The acid salts of primary amine, secondary amine or/and tertiary amine(s) are used as the active hydrogen compound capable of introducing the cationic group in order to prepare an epoxy resin containing primary amino, secondary amino or/and tertiary amino group(s).

The specific examples include butylamine, octylamine, diethylamine, dibutylamine, methylbutylamine, monoethanolamine, diethanolamine, N-methylethanolamine, triethylamine hydrochloride, N,N-dimethylethanolamine acetate, a mixture of diethyldisulfide and acetic acid and the like, additionally, the secondary amine blocking the primary amine such as the ketimine of aminoethylethanolamine and the diketimine of diethylenetriamine. A plural number of amines may be used in combination.

***Blocked isocyanate curing agent***
The polyisocyanate, which is used in the blocked isocyanate curing agent in the present invention, means a compound having 2 or more of isocyanate groups in a molecule. As the polyisocyanate, for example, any of an aliphatic type, an alicyclic type, an aromatic type, an aromatic-aliphatic type and the like may be used.

The specific example of the polyisocyanate includes tolylene diisocyanate (TDI), aromatic diisocyanates such as diphenylmethane diisocyanate (MDI), p-phenylene diisocyanate and naphthalene diisocyanate; aliphatic diisocyanates having a carbon number of 3 to 12 such as hexamethylene diisocyanate (HDI), 2,2,4-trimethylhexane diisocyanate and lysine diisocyanate; alicyclic diisocyanates having a carbon number of 5 to 18 such as 1,4-cyclohexane diisocyanate (CDI), isophorone diisocyanate (IPDI), 4,4'-dicyclohexylmethane diisocyanate (hydrogenated MDI), methylcyclohexane diisocyanate, isopropylidene dicyclohexyl-4,4'-diisocyanate and 1,3-diisocyanatomethylcyclohexane (hydrogenated XDI), hydrogenated TDI and 2,5- or 2,6-bis(isocyanatomethyl)-bicyclo[2,2,1]heptane (also called as norbornane diisocyanate); aliphatic diisocyanates having an aromatic ring such as xylylene diisocyanate (XDI) and tetramethylxylylene diisocyanate (TMXDI); the modified product of these diisocyanates (urethanated product, carbodiimides, urethodione, urethoimine, biuret and/or isocyanurate modified product), etc. These can be used alone or 2 or more thereof can be used in combination.

An adduct or a prepolymer which is obtained by reacting polyisocyanate with polyvalent alcohols such as ethylene glycol, propylene glycol, trimethylolpropane and hexanetriol at an NCO/OH ratio of 2 or more may be also used for the blocked isocyanate curing agent.

The blocking agent is added to a polyisocyanate group, stable at ambient temperature, but can regenerate a free isocyanate group when it is heated to dissociation temperature or more.

As the blocking agent, conventionally used agents such as ε-caprolactam, ethyleneglycol monobutyl ether can be used.

***Pigment***
The electrodeposition coating composition according to the present invention may include pigments which have been conventionally used. However, the "pigments" referred to herein do not include the resin fine particles described above. The example of the pigments, which may be used, includes conventionally used inorganic pigments, for example, coloring pigments such as titanium white, carbon black and colcothar; filler pigments such as kaoline, talc, aluminum silicate, calcium carbonate, mica and clay; corrosion resistant pigments such as zinc phosphate, iron phosphate, aluminum phosphate, calcium phosphate, zinc phosphite, zinc cyanide, zinc oxide, aluminum tripolyphosphate, zinc molybdate, aluminum molybdate, calcium molybdate and aluminum phosphomolybdate and aluminum zinc phosphomolybdate, and the like.

These pigments may be or not may be incorporated in the electrodeposition coating composition. When these pigments are incorporated in the electrodeposition coating composition, it is preferable to be incorporated at the concentration of no more than 10% by weight, for example, the concentration of 0.1 to 10% by weight, more preferably 0.2 to 8% by weight, further preferably 0.2 to 5% by weight based on the solid contents in the electrodeposition coating composition. The electrodeposition coating composition according to the present invention has good shielding ability, viscosity and the like, even though the pigment is not incorporated therein, as described above. When the concentration of the pigment is more than 10% by weight, it possibly provides less re-dispersibility of the electrodeposition composition and less planarity of the appearance of the resulting coating film.

When a pigmen is used as the component of the electrodeposition coating composition, the pigment is generally preliminarily dispersed in an aqueous medium at high concentration to be paste shape (pigment-dispersed paste). Since the pigment is powder, it is difficult to disperse it by one step to a uniform low concentration state which is used for the electrodeposition coating composition. In general, the paste is called as pigment-dispersed paste.

The pigment-dispersed paste is prepared by dispersing pigments in an aqueous medium together with a pigment-dispersed resin varnish. As the pigment-dispersed resin, there are generally used a cationic or nonionic low molecular weight surfactant and cationic polymers such as a modified epoxy resin having a quaternary ammonium groups and/or tertiary sulfonium groups. As the aqueous medium, ion exchanged water, water containing a small amount of alcohols and the like are used.

Generally, pigment-dispersed resin is used in an amount of 20 to 100 parts by mass based on the pigment of 100 parts by mass (as basis of solid contents). After mixing a pigment-dispersed resin varnish and a pigment, the pigment is dispersed using a conventional dispersing apparatus such as ball mill and sand grind mill to obtain a given uniform particle size of the pigment in the mixture to give a pigment-dispersed paste.

In addition to the components described above, the electrodeposition coating composition according to the present invention may include, as a catalyst, organo tin compounds such as dibutyltin laurate, dibutyltin oxide, dioctyltin oxide, amines such as N-methylmorpholine, salts of metal such as strontium, cobalt, copper. They can effect as a catalyst for dissociating the blocking agent of the curing agent. It is preferable that concentration of the catalyst is 0.1 to 6 parts by mass based on 100 parts by mass (solid contents) of total of the cationic epoxy resin and the curing agent in the electrodeposition coating composition.

***Preparation of electrodeposition coating composition***
The electrodeposition coating composition according to the present invention can be prepared by dispersing a cationic epoxy resin, a blocked isocyanate curing agent, resin fine particles dispersed paste as well as an optional pigment-dispersed paste and an optional catalyst in an aqueous medium. Generally, the aqueous medium includes a neutralizing acid to neutralize the cationic epoxy resin to improve dispersibility of the binder resin emulsion. The neutralizing acids include inorganic acids and organic acids, such as hydrochloric acid, nitric acid, phosphoric acid, formic acid, acetic acid and lactic acid.

The amount of the neutralizing acid to be used is 10 to 25 mg equivalent, preferably 15 to 20 mg equivalent relative to 100 g of the binder resin solid contents which contains the cationic epoxy resin and the blocked isocyanate curing agent. When the amount of the neutralizing acid is less than 10 mg equivalent, its affinity to water is insufficient and the binder resin can not be dispersed in water or the acid significantly lose its stability. When the amount is more than 25 mg equivalent, the electric amount required for the deposition is increased and the depositability of the solid contents in the coating composition decreases, which results in less throwing power of electrolytic coloring.

A method for formulating and dispersing a cationic epoxy resin and a blocked isocyanate as a curing agent in an aqueous medium includes a method for mixing a blocked isocyanate with a cationic epoxy resin, in a solution state, to prepare an emulsion.

The amount of the blocked isocyanate curing agent is to be sufficient to react with active hydrogen-containing functional groups such as primary or secondary amino groups and hydroxy groups in the cationic epoxy resin upon curing to produce a good cured coating film. Generally, it is represented by mass ratio of the cationic epoxy resin and the blocked isocyanate curing agent (as basis of solid contents) (epoxy resin/curing agent), generally in a range of 90/10 to 50/50, preferably 80/20 to 65/35.

An organic solvent is required as a solvent for preparing resin components such as cationic epoxy resins, blocked isocyanate curing agents and pigment-dispersed resins. It needs complicated procedures to remove the solvents completely. Alternatively, when a binder resin contains an organic solvent, fluidity of the uncured coating film to form cured film is improved to increase smoothness of the coating film.

Organic solvents generally contained in the coating composition includes ethylene glycol monobutyl ether, ethylene glycol monohexyl ether, ethylene glycol monoethylhexyl ether, propylene glycol monobutyl ether, dipropylene glycol monobutyl ether, propylene glycol monophenyl ether and the like.

In addition to the above disclosed components, the coating composition may have a conventional additive for the coating composition, such as plasticizers, surfactants, antioxidants and UV absorbing agents.

In the cationic electrodeposition coating composition of the present invention, solid contents contained in the coating composition is preferably 1 to 30% by weight, more preferably 2 to 20% by weight. Even if the cationic electrodeposition coating composition of the present invention is an electrodeposition coaling composition containing such solid contents, the coating composition has excellent effects such as superior sedimentation stability and re-dispersibility. The electrodeposition coating composition according to the present invention can provide an electrodeposition coating film having a sufficient film thickness and an excellent appearance thereof.

The electrodeposition coating composition according to the present invention is subjected to an electrodeposition coating to form an electrodeposition coating film on an article to be coated. The article to be coated may include those having electric conductivity, but which is not specifically limited to, for example, iron plates, copper plates, aluminum plates, surface-treated materials thereof and moldings thereof, and the like.

The electrodeposition coating is performed by applying voltage, generally 50 to 450 V, between cathode which is an article to be coated and anode. When the applied voltage is less than 50 V, it provides inadequate electrodeposition. When the applied voltage is more than 450 V, the coating film is decomposed and has poor appearance. On electrodeposition coating, bath temperature containing a coating composition is generally adjusted to 10 to 45°C.

An electrodeposition process for the cationic electrodeposition coating composition includes
a step of immersing an article to be coated into a cationic electrodeposition coating composition, and
a step of applying voltage between cathode which is said article and anode to deposit a coating film. Herein, the period for applying voltage is depends on the electrodepositioning conditions, but it may be generally 2 to 4 minutes.

Thickness of the electrodeposition coating film is preferably 5 to 25 µm, more preferably about 20 µm. When the thickness of the film is less than 5 µm, it provides insufficient anti-corrosion property. When the thickness is more than 25 µm, the coating composition is wasted.

After completion of the electrodeposition process, thus obtained electrodeposition coating film is directly subjected, or followed by washing with water, to baking at 120 to 260°C, preferably 140 to 220°C, for 10 to 30 minutes to be cured.

### EXAMPLES

The present invention is further specifically described below according to Examples but the present invention is not limited to these. In the Examples, "part(s)" and "%" are according to weight basis unless otherwise noted.

**Preparation Example 1**

### Preparation of blocked isocyanate curing agent

In a flask equipped with a stirrer, a cooling tube, a nitrogen introducing tube, a thermometer and a dropping funnel, 199 parts of a trimer of hexamethylene diisocyanate (CORONATE HX manufactured by NIPPON POLYURETHANE INDUSTRY CO., LTD.), 32 parts of methylisobutylketone and 0.03 part of dibutyltin dilaurate were weighted, and 87.0 parts of methyl ethyl koto oxim was added dropwise from the dropping funnel over 1 hour with stirring and nitrogen bubbling. The reaction was started at 50°C and the temperature was raised to 70°C. Subsequently, the reaction was continued for 1 hour and the reaction was maintained until the absorption based on NCO group was disappeared on an infrared spectrometer. Subsequently, 0.74 part of n-butanol and 39.93 parts of methylisobutylketone were added to give 80% of nonvolatile contents.

**Preparation Example 2**

### Preparation of emulsion containing amine modified epoxy resin

In a flask equipped with a stirrer, a cooling tube, a nitrogen introducing tube and a dropping funnel, 71.34 parts of 2,4/2,6-trilenediisocyanate (80/20 wt%), 111.98 parts of methylisobutylketone and 0.02 part of dibutyltin dilaurate were weighted, and 14.24 parts of methanol was added dropwise from the dropping funnel over 30 minutes with stirring and nitrogen bubbling. The temperature was raised from room temperature to 60°C due to exothermic heat. Subsequently, the reaction was maintained for 30 minuses, and then 46.98 parts of ethylene glycol mono-2-ethylhexyl ether was added dropwise from the dropping funnel over 30 minutes. The temperature was raised from 70 to 75°C due to exothermic heat. The reaction was maintained for 30 minutes, and then 41.25 parts of bisphenol A propyleneoxide (5 mol) adduct (BP-5P manufactures by Sanyo Chemical Industries, Ltd.) was added, the temperature was allowed to rise up to 90°C, and the reaction was continued until NCO group was consumed with IR spectrum measurement.

Subsequently, 475.0 parts of a bisphenol A type epoxy resin having an epoxy equivalent of 475 (YD-7011R manufactured by Tohto Kasei Co., Ltd.) was added and dissolved uniformly, and then the temperature was raised from 130°C to 142°C, water was removed from the system by azeotropy with MIBK. After cooling to 125°C, an oxazolidone ring-forming reaction via a demethanolation reaction took place by adding 1.107 parts of benzyldimethylamine. The reaction was maintained until the epoxy equivalent reached to 1140.

Subsequently, after cooling to 100°C, 24.56 parts of N-methylethanolamine, 11.46 parts of diethanolamine and 26.08 parts of aminoethylethanolamine ketimine (78.8% methylisobutylketone solution) were added and allowed to react at 110°C for 2 hours. Subsequently, 20.74 parts of ethylene glycol mono-2-ethylhexylether and 12.85 parts of methylisobutylketone were added to dilute to adjust the nonvolatile contents to 82%. The number average molecular weight (by GPC method) was 1380 and the amine equivalent was 94.5 meq/100g.

145.11 parts of ion-exchanged water and 5.04 parts of acetic acid were weighted in another vessel, a mixture of 320.11 parts of the amine-modified epoxy resin described above (75.0 parts of the solid contents) and 190.38 parts of the blocked isocyanate curing agent of the Preparation Example 1 (25.0 parts of the solid contents), which had been heated to 70°C, was gradually added dropwise, was stirred to be uniformly dispersed. Subsequently, ion-exchanged water was added to adjust the solid contents to 36%.

**Preparation Example 3**

### Preparation of pigment-dispersed resin varnish

In a flask equipped with a stirrer, a cooling tube, a nitrogen introducing tube, a thermometer and a dropping funnel, 382.20 parts of a bisphenol A type epoxy resin having an epoxy equivalent of 188 (DER-331J (product name)) and 111.98 parts of bisphenol A were weighted, the temperature was raised to 80°C, the mixture was dissolved uniformly, and then 1.53 parts of 1% solution of 2-ethyl-4-methylimidazole was added and they were reacted at 170°C for 2 hours. After cooling to 140°C, 196.50 parts of 2-ethylhexanol-halfblocked isophoronediisocyanate (nonvolatile contents: 90%) was added to the mixture and allowed to react until NCO group was consumed. 205.00 parts of dipropylene glycol monobutyl ether was added to the mixture, and then 408.00 parts of 1-(2-hydroxyethylthio)-2-propanol and 134.00 parts of dimethylol propionic acid were added, and 144.00 parts of ion-exchanged water was added to react at 70°C. The reaction was maintained until the acid value reached to no more than 5. The resulting resin varnish was diluted with 1150.50 parts of ion-exchanged water to yield 35% of the nonvolatile contents.

**Preparation Example 4**

### Preparation of pigment-dispersed paste

120 parts of the pigment-dispersed resin varnish obtained in the Preparation Example 3, 2.0 parts of carbon black, 100.0 parts of kaolin, 72.0 parts of titanium dioxide, 8.0 parts of dibutyltin oxide, 18.0 parts of aluminum phosphomolybdate and 184 parts of ion-exchanged water were put into a sand grind mill and dispersed to obtain particle size of no more than 10 µm to yield a pigment-dispersed paste (solid contents: 48%).

**Preparation Example 5**

### Preparation of resin fine particles dispersed paste

A mixture of 100.0 parts of resin fine particles ("Chemisnow MR-2G (product name)" manufactured by Soken Chemical & Engineering Co., Ltd.), 85.7 parts of the cationic pigment-dispersed resin varnish according to the Preparation Example 3 and 464.3 parts of deionized water was stirred for 20 minutes to give a resin fine particles dispersed paste (solid contents: 20%).

**Preparation Example 6**

### Preparation of acrylic resin fine particles (microgel)

200 parts of deionized water was added to a reaction vessel and heated to 75°C with stirring. 1 part of aqueous 2,2'-azobis(2-(2-imidazolin-2-yl)propane) solution completely (100%) neutralized with acetic acid was added dropwise over 5 minutes to the mixture. After aging for 5 minutes, 10 parts of methyl methacrylate was added dropwise over 5 minutes. After aging for further 5 minutes, a mixture of α,β-ethylenic unsaturated monomers, which contains 40 parts of methyl methacrylate (MMA), 40 parts of n-butyl acrylate (NBA) and 10 parts of ethylene glycol dimethacrylate (EGDM), was added to an aqueous solution, which was obtained by mixing 1 part of a nonionic emulsifier, ACRON RN-20 (a nonion-type emulsifier manufactured by DAI-ICHI KOGYO SEIYAKU CO., LTD.) and 200 parts of deionized water, and the mixture was stirred to give a pre-emulsion, and then the pre-emulsion was added dropwise over 40 minutes. After aging for 60 minutes, cooling gave a dispersion containing crosslinked acrylic resin fine particles. The resulted dispersion containing crosslinked resin fine particles had 20% of nonvolatile contents, pH 5.2 and the average particle size of 100 nm.

**Example 1**
The resin emulsion according to the Preparation Example 2 and the resin fine particles dispersed paste according to the Preparation Example 5 were mixed to give a cationic electrodeposition coating composition so that the concentration of the resin fine particles, which is based on solid contents of the coating composition, was adjusted as listed in Table 1. The solid content of the resulted cationic electrodeposition coating composition was 20.0%. In the following Examples and Comparative Examples, respectively, each weight ratio of the components and the average particle size of the used resin fine particles were varied respectively as listed in Table 1.

**Example 2**
In the Example 1, "Chemisnow SX-350H" was used instead of "Chemisnow MR-2G" used in the Preparation Example 5, in a similar manner to the Preparation Example 5, to produce a resin fine particles dispersed paste, and a cationic electrodeposition coating composition was obtained in a similar procedure to the Example 1 in accordance with Table 1. The solid content in the resulted cationic electrodeposition coating composition was 20.0%.

**Example 3**
In the Example 1, "Techpolymer SBX-6" manufactured by SEKISUI PLASTICS CO., LTD. was used instead of "Chemisnow MR-2G" used in the Preparation Example 5, in a similar manner to the Preparation Example 5, to produce a resin fine particles dispersed paste, and a cationic electrodeposition coating composition was obtained in a similar procedure to the Example 1 in accordance with Table 1. The solid content in the resulted cationic electrodeposition coating composition was 20.0%.

**Example 4**
In the Example 1, "Techpolymer BM30X-8" manufactured by SEKISUI PLASTICS CO., LTD. was used instead of "Chemisnow MR-2G" used in the Preparation Example 5, in a similar manner to the Preparation Example 5, to produce a resin fine particles dispersed paste, and a cationic electrodeposition coating composition was obtained in a similar procedure to the Example 1 in accordance with Table 1. The solid content in the resulted cationic electrodeposition coating composition was 20.0%.

**Example 5**
The resin emulsion according to the Preparation Example 2, the pigment-dispersed paste according to the Preparation Example 4 and the resin fine particles dispersed paste according to the Preparation Example 5 were mixed to adjust the concentration of the pigment and the concentration of the resin fine particles relative to solid contents of the coating composition as listed in Table 1. A cationic electrodeposition coating composition was obtained. The solid content in the resulted cationic electrodeposition coating composition was 20.0%. In the following Examples and Comparative Examples, each weight ratio of the components and the average particle size of the used resin fine particles were varied respectively as listed in Table 1. In the Example 1, "Chemisnow MR-2G" used in the Preparation Example 5 was used, in a similar procedure to the Example 1, in accordance with Table 1 to give a cationic electrodeposition coating composition. The solid content in the resulted cationic electrodeposition coating composition was 20.0%.

**Example 6**
In the Example 5, "Chemisnow MR-2HG" was used instead of "Chemisnow MR-2G" used in the Preparation Example 5, in a similar manner to the Preparation Example 5, to produce a resin fine particles dispersed paste, and a cationic electrodeposition coating composition was obtained in a similar procedure to the Example 5 in accordance with Table 1. The solid content in the resulted cationic electrodeposition coating composition was 20.0%.

**Example 7**
In the Example 5, "Techpolymer SBX-6" manufactured by SEKISUI PLASTICS CO., LTD. was used instead of "Chemisnow MR-2G" used in the Preparation Example 5, in a similar manner to the Preparation Example 5, to produce a resin fine particles dispersed paste, and a cationic electrodeposition coating composition was obtained in a similar procedure to the Example 5 in accordance with Table 1. The solid content in the resulted cationic electrodeposition coating composition was 20.0%.

**Example 8**
In the Example 1, "Chemisnow MR-10HG" was used instead of "Chemisnow MR-2G" used in the Preparation Example 5, in a similar manner to the Preparation Example 5, to produce a resin fine particles dispersed paste, and a cationic electrodeposition coating composition was obtained in a similar procedure to the Example 1 in accordance with Table 1. The solid content in the resulted cationic electrodeposition coating composition was 20.0%.

**Comparative Example 1**
In a similar manner to the Example 5, the resin emulsion according to the Preparation Example 2, the pigment-dispersed paste according to the Preparation Example 4 and the acrylic resin fine particles according to the Preparation Example 6 were mixed to adjust the pigment concentration based on solid contents of the coating composition and the concentration of the acrylic resin fine particles as listed in Table 2. A cationic electrodeposition coating composition was obtained. The solid content in the resulted cationic electrodeposition coating composition was 20.0%.

**Comparative Example 2**
In the Example 1, "Techpolymer ARX-15" manufactured by SEKISUI PLASTICS CO., LTD. was used instead of "Chemisnow MR-2G" used in the Preparation Example 5, in a similar manner to the Preparation Example 5, to produce a resin fine particles dispersed paste, and a cationic electrodeposition coating composition was obtained in a similar procedure to the Example 1 in accordance with Table 2. The solid content in the resulted cationic electrodeposition coating composition was 20.0%.

**Comparative Example 3**
The resin emulsion according to the Preparation Example 2, the pigment-dispersed paste according to the Preparation Example 4 and the acrylic resin fine particles according to the Preparation Example 6 were mixed to adjust the pigment concentration based on solid contents of the coating composition and the concentration of the acrylic resin fine particles as listed in Table 2. A cationic electrodeposition coating composition was obtained. The concentration of the pigment in the resulted cation electrodeposition coating composition was 10% (as basis of the total solid contents) and the concentration of the resin fine particles was 30%.

**Comparative Example 4**
In the Example 1, "RUBCOULEUR 215 (M) WHITE" (with specific gravity 1.36) manufactured by Dainichiseika Color & Chemicals Mfg-Co., Ltd. was used instead of "Chemisnow MR-2G" used in the Preparation Example 5, to produce a cationic electrodeposition coating composition in a similar procedure to the Example 1 in accordance with Table 2. The solid content in the resulted cationic electrodeposition coating composition was 20.0%.

**Comparative Example 5**
In the Example 1, "FLO-BEADS LE-1080" manufactured by SUMITOMO SEIKA CHEMICALS CO., LTD. was used instead of "Chemisnow MR-2G" used in the Preparation Example 5, in a similar manner to the Preparation Example 5, to produce a resin fine particles dispersed paste, and a cationic electrodeposition coating composition was obtained in a similar procedure to the Example 1 in accordance with Table 2. The solid content in the resulted cationic electrodeposition coating composition was 20.0%.

**Comparative Example 6**
In the Example 1, "Techpolymer SBX-6" manufactured by SEKISUI PLASTICS CO., LTD. was used instead of "Chemisnow MR-2G" used in the Preparation Example 5, in a similar manner to the Preparation Example 5, to produce a resin fine particles dispersed paste, and a cationic electrodeposition coating composition was obtained in a similar procedure to the Example 1 in accordance with Table 2. The concentration of the resin fine particles in the resulted cationic electrodeposition coating composition was 0.5% (as basis of the total solid contents).

**Comparative Example 7**
In the Example 1, "Techpolymer MB-4C" manufactured by SEKISUI PLASTICS CO., LTD. was used instead of "Chemisnow MR-2G" used in the Preparation Example 5, in a similar manner to the Preparation Example 5, to produce a resin fine particles dispersed paste, and a cationic electrodeposition coating composition was obtained in a similar procedure to the Example 1 in accordance with Table 2. The concentration of the resin fine particles in the resulted cationic electrodeposition coating composition was 40.0% (as basis of the total solid contents).

The cationic electrodeposition coating compositions obtained in the Examples and Comparative Examples described above as well as the electrodeposition coating film obtained by electrodeposition coating itself was evaluated by the following methods.

**Sedimentability test**
The cationic electrodeposition coating compositions obtained in the Examples and Comparative Examples described above were each poured into a test tube having diameter of 20 mm at a height level of 100 mm. This test tube was allowed to stand for 72 hours to produce precipitates. Height (mm) of the resulted precipitates was measured to determine a sedimentation amount.

**Re-dispersibility test**
Each 85 g of the cationic electrodeposition coating compositions obtained in the Examples and Comparative Examples described above was poured into a 100 ml test tube, and this test tube was allowed to stand for 72 hours to produce precipitates. Subsequently, the test tube was rotated upside down, i.e., turned 180 degree, until the precipitates were completely dispersed. The number of rotation was counted.

**Planar appearance**
The cation electrodeposition coating compositions obtained in the Examples and Comparative Examples described above were each subjected to an electrodeposition on an untreated zinc phosphate steel plate so that the thickness of the dried film is 20 µm. The plate was washed with water and baked for 10 minutes at 160°C. An arithmetical mean roughness, Ra (µm), of the surface of the resulted coating film was measured in a surface roughness tester, Surftest-211 (manufactured by Mitutoyo), wherein cut-off length is 2.5mm, in accordance with JIS B 0601-2001(ISO 4287). Lower Ra value means a better appearance.

**Evaluation of cissing (oil contaminated cissing)-preventing property**
A 30 ppm of machine oil for rust-prevention was contaminated into each of the cationic electrodeposition coating compositions obtained in the Examples and Comparative Examples, the mixture was continuously stirred for 48 hours. This mixture was poured into a coating bath. A test piece (size: 7X15cm) was set evenly at the depth of 10cm and kept statically for 5 minutes. Subsequently, an electrodeposition coating was performed at 30°C of the coating bath temperature so that the thickness of the dried film was 20 µm. Subsequently, the test piece was washed with water and left for 30 minutes, and then baked for 160 X10 minutes. The surface of the coating film was visually observed after baking, the number of the cissing spots was counted to evaluate in accordance with the following valuation basis.

**Valuation basis**
○: 0 to 4 cissing spots
△: 5 to 10 cissing spots
× : no less than 11 cissing spots

As shown in the following Table 1 and Table 2, it is affirmed that the electrodeposition coating compositions according to the present inventions are superior in sedimentation stability and re-dispersibility to those of the electrodeposition coating compositions of the Comparative Examples, and the present electrodeposition coating composition can provide a coating film having an excellent planar appearance.

**Table 1**

| | | **Ex. 1** | **Ex. 2** | **Ex. 3** | **Ex. 4** | **Ex. 5** | **Ex. 6** | **Ex. 7** | **Ex. 8** |
|---|---|---|---|---|---|---|---|---|---|
| Concentration of pigment (%) | | 0 | 0 | 0 | 0 | 5 | 5 | 5 | 5 |
| Resin fine particles | Average particle size (µm) | 1 | 3.5 | 6 | 8 | 1 | 2 | 6 | 10 |
| | Specific gravity (g/cc) | 1.19 | 1.05 | 1.06 | 1.10 | 1.19 | 1.19 | 1.06 | 1.19 |
| | Concentration (%) | 3 | 30 | 15 | 20 | 5 | 20 | 10 | 10 |
| sedimentability | Sedimentation amount (mm) | 0.5 | 0.4 | 0 | 0 | 1.2 | 1.1 | 1 | 1 |
| Re-dispersibility | Number (times) | 1 | 1 | - | - | 3 | 3 | 2 | 2 |
| Planar appearance | Ra (µm) | 0.21 | 0.22 | 0.24 | 0.25 | 0.28 | 0.27 | 0.25 | 0.27 |
| Oil cissing property | | ○ | ○ | ○ | ○ | ○ | ○ | ○ | ○ |

| | | | | | | | | | |
|---|---|---|---|---|---|---|---|---|---|
| Note: In the table, "-" means that the re-dispersibility test is not conducted due to no resulting sedimentation product. | | | | | | | | | |

**Table 2**

| | | **Comp. Ex. 1** | **Comp. Ex. 2** | **Comp. Ex. 3** | **Camp. Ex. 4** | **Comp. Ex. 5** | **Comp. Ex. 6** | **Comp. Ex. 7** |
|---|---|---|---|---|---|---|---|---|
| Concentration of pigment (%) | | 5 | 0 | 10 | 0 | 0 | 0 | 0 |
| Resin fine particles | Average particle size (µm) | 0.1 | 15 | 1 | 8.5 | 6 | 5 | 4 |
| | Specific gravity (g/cc) | 1.20 | 1.10 | 1.20 | 1.36 | 0.92 | 1.06 | 1.19 |
| | Concentration (%) | 10 | 10 | 40 | 10 | 15 | 0.5 | 40 |
| sedimentability | Sedimentation amount (mm) | 1 | 3 | 3 | 5 | 10^{*(Note 1)} | 0 | 1 |
| Re-dispersibility | Number (times) | 2 | 10< | 10< | 10< | 10< | - | 2 |
| Planar appearance | Ra (µm) | 0.65 | 0.75 | 0.78 | 0.84 | 0.29 | 0.21 | 0.45 |
| Oil cissing property | | △ | ○ | ○ | ○ | △ | × | ○ |

| | | | | | | | | |
|---|---|---|---|---|---|---|---|---|
| * Note 1: Thickness of the separated and floating cake | | | | | | | | |

## Claims

1. A cationic electrodeposition coating composition comprising resin fine particles having average particle size of no less than 0.5 µm to less than 15 µm in a proportion of 1 to 30% by weight based on solid contents of the coating composition.

2. The cationic electrodeposition coating composition according to claim 1, wherein the resin fine particle has specific gravity of 0.95 to 1.30.

3. The cationic electrodeposition coating composition according to claim 1 or 2, which is a cationic electrodeposition coating composition further comprising a cationic epoxy resin and a blocked isocyanate curing agent.

4. The cationic electrodeposition coating composition according to any of claims 1 to 3, wherein concentration of a pigment is no more than 10% by weight based on solid contents of the coating composition.

5. The cationic electrodeposition Gearing composition according to any of claims 1 to 3, which is free from a pigment.

6. The cationic electrodeposition coating composition according to any of claims 1 to 3, wherein concentration of a pigment is 0.1 to 10% by weight based on solid contents of the coating composition.
